## Europäisches Patentamt
## European Patent Office
## Office européen des brevets

(11) Veröffentlichungsnummer: **0 150 493**
**B1**

(12) **EUROPÄISCHE PATENTSCHRIFT**

(45) Veröffentlichungstag der Patentschrift:
10.08.88

(51) Int. Cl.⁴: **F 16 K 31/08**, F 16 K 31/06

(21) Anmeldenummer: **84116252.2**

(22) Anmeldetag: **22.12.84**

(54) **Steuerventil.**

(30) Priorität: **23.01.84 DE 3402118**

(43) Veröffentlichungstag der Anmeldung:
**07.08.85 Patentblatt 85/32**

(45) Bekanntmachung des Hinweises auf die Patenterteilung:
**10.08.88 Patentblatt 88/32**

(84) Benannte Vertragsstaaten:
**DE FR GB**

(56) Entgegenhaltungen:
**DE-A-2 112 614**
**DE-B-1 282 402**
**DE-U-1 900 054**
**FR-A-588 211**
**GB-A-1 428 741**
**US-A-2 587 356**

(73) Patentinhaber: **ROBERT BOSCH GMBH, Postfach
50, D-7000 Stuttgart 1 (DE)**

(72) Erfinder: **Burkel, Rainer, Dipl.- Ing., Brühlstrasse 5,
D-7144 Asperg (DE)**
Erfinder: **Zieher, Peter, Ing., Buchbergstrasse 22,
D-7147 Eberdingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Steuerventil nach der Gattung des Hauptanspruchs. Bei einem derartigen bekannten Steuerventil sind die Steuerschieber mit Stößeln versehen, die durch Elektromagnete angezogen werden. Ein Durchlaß der Flüssigkeit ist nur in Betriebsstellung beider Steuerschieber möglich. In Ausgangsstellung befinden sich beide Steuerschieber in Schließstellung und werden beide bei Ansteuerung der Elektromagnete in die Öffnungsstellung bewegt. Dadurch wird die Schaltzeit verlängert und die Schaltgenauigkeit verschlechtert.

Aus der Druckschrift US-A-2 587 356 ist ein Steuerventil bekannt, das zwei magnetisch betätigbare Sitzventile mit einer gemeinsamen Membran als Schließkörper aufweist. Die Sitzventile öffnen oder schließen gleichzeitig. Eine Überlappung der Öffnungszeiten der Sitzventile ist nicht vorgesehen.

### Vorteile der Erfindung

Das erfindungsgemäße Steuerventil mit den kennzeichnenden Merkmalen des Hauptanspruchs hat demgegenüber den Vorteil, daß eine besonders genaue Dosierung der Flüssigkeitsmenge möglich ist. Es ist kein Eisenkern notwendig, wodurch die Induktivität des Elektromagneten verringert wird. Die Schaltzeiten des Steuerventils werden verkürzt; die Lebensdauer ist durch die Verwendung von Permanentmagneten groß. Der Schaltzeitfehler geht nunmehr nur mit einer Flanke des Schaltens des Steuerventils in das Zumeßergebnis ein.

Durch die in den Unteransprüchen aufgeführten Maßnahmen sind vorteilhafte Weiterbildungen und Verbesserungen der im Hauptanspruch angegebenen Merkmale möglich.

### Zeichnung

Ausführungsbeispiele der Erfindung sind in der Zeichnung dargestellt und in der nachfolgenden Beschreibung näher erläutert. Es zeigen Figur 1 einen Längsschnitt durch ein Steuerventil , Figur 2a ein Diagramm der Ansteuerung einer Spule über die Zeit, Figur 2b den Öffnungsweg eines Steuerschiebers über die Zeit, Figur 2c die Ansteuerung einer zweiten Spule über die Zeit, Figur 2d den Öffnungsweg eines zweiten Steuerschiebers, Figur 2e die resultierende Öffnungszeit des Steuerventils und Figur 3 einen Längsschnitt durch ein zweites Ausführungsbeispiel.

### Beschreibung der Ausführungsbeispiele

Im Gehäuse 10 eines elektromagnetischen Steuerventils 11 ist eine mittige Schieberbohrung 12 ausgebildet, in der zwei Steuerschieber 13, 14 aus nichtmagnetischem Material gleitend geführt werden. Die Schieberbohrung 12 ist in herkömmlich bekannter Weise zu einer Zulaufkammer 15, zwei Steuerkammern 16, 17 und einer Verbraucherkammer 18 erweitert, die als Ringnuten ausgebildet sind. Die Verbraucherkammer 18 ist zwischen den beiden Steuerkammern 16, 17 angeordnet. Die beiden Steuerkammern 16, 17 sind über einen Kanal 19 miteinander verbunden. Die Zulaufkammer 15 ist über einen Kanal 20 an eine nicht dargestellte Pumpe angeschlossen, und von der Verbraucherkammer 18 führt ein Kanal 21 zu einem nicht dargestellten Verbraucher. Etwa in der Mitte der Schieberbohrung 12 führt ein Entlüftungskanal 22 ins Freie.

Beide Steuerschieber 13, 14 sind gleich ausgebildet. Jeder weist eine mittige Ringnut 23, 24 mit zwei Steuerkanten 25, 26 zum Steuern des Druckmittels auf und ragt mit seinem äußeren Ende 27, 28 in eine Erweiterung 29, 30 eines Gehäuses 31, 32 eines Elektromagneten 33, 34. Diese Gehäuse 31, 32 sind fest am Gehäuse 10 des Steuerventils 11 angebaut und verschließen die Schieberbohrung 12.

An dem außen liegenden Ende 27, 28 eines jeden Steuerschiebers 13, 14 ist ein Permanentmagnet 35, 36 angeordnet, der in Wirkverbindung mit dem Elektromagneten 33, 34 steht. Dieser besteht jeweils aus einer, in einer Ausnehmung 37, 38 des Gehäuses 31, 32 angeordneten Spule 39, 40 mit einem weichmagnetischen Spulenkörper 41, 42. Diese Ausnehmungen 37, 38 schließen sich an die Erweiterungen 29, 30 an.

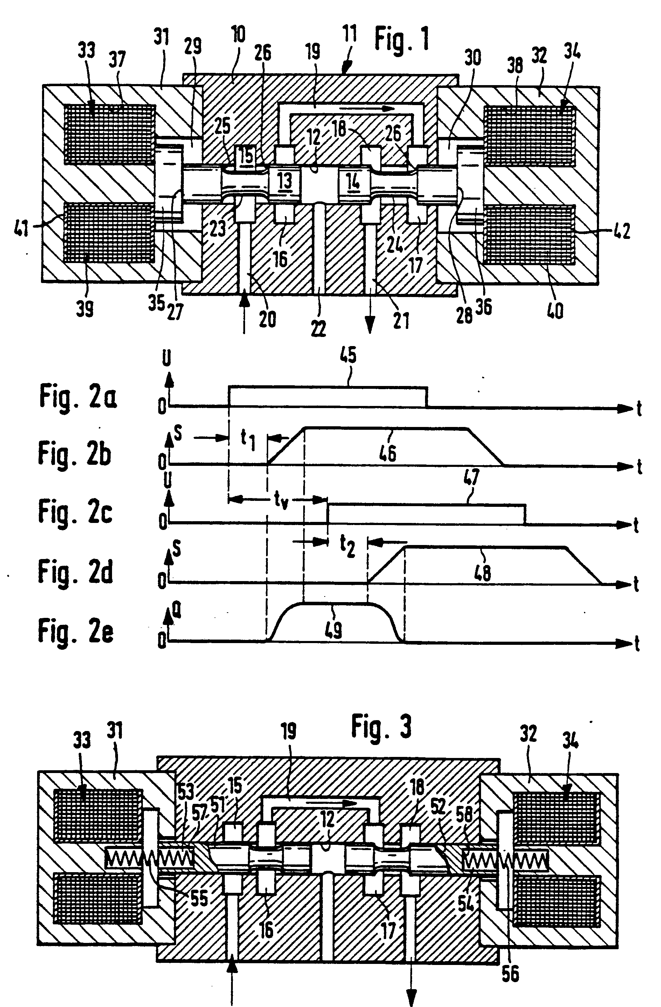

Die Arbeitsweise des oben beschriebenen Steuerventils 11 wird anhand der Diagramme nach den Figuren 2a bis 2e erläutert. Die in Figur 1 gezeigte Stellung der beiden Steuerschieber 13, 14 stellt die Ausgangsstellung des Steuerventils 11 dar. Der Steuerschieber 13 ist dabei in schließstellung, während der Steuerschieber 14 sich in Öffnungsstellung befindet. In Figur 2a ist mit der Kurve 45 der Verlauf der Spannung U über der Zeit t bei stromdurchfloßener Spule 39 dargestellt. Während dieser Zeit wird ein Magnetfeld erzeugt, das gegenüber dem Permanentmagneten 35 gleichpolig ist, d.h. abstoßend wirkt. Durch diese abstoßende Kraft wird der Steuerschieber 13 in seine Öffnungsstellung verschoben. In Figur 2b ist anhand der Kurve 46 der Öffnungsweg s des Steuerschiebers 13 über der Zeit t aufgetragen. Nach einer gewissen Totzeit $t_1$, die durch den Aufbau des Magnetfeldes und das Verschieben des Steuerschiebers 13 bis zur Steuerkante 25 hervorgerufen ist, befindet sich der Steuerschieber 13 in seiner Öffnungsstellung, so daß die Verbindung von der Zulaufkammer 15 zur Steuerkammer 16 geöffnet ist. Nun kann Druckmittel zum Verbraucher fließen. Wird dagegen die Spule 40 erregt, so ergibt sich der in Figur 2c dargestellte Verlauf 47 der Spannung U über der Zeit t. Die Zeitperiode zwischen Ansteuerung der Spule 39 und Ansteuerung der Spule 40 ist als Ansteuerzeitversatz $t_V$ bezeichnet. Das in der Spule 40 erzeugte Magnetfeld ist wieder gegenpolig zum Permanentmagneten 36 ausgerichtet, und somit bewegt sich der Steuerschieber 14 vom Elektromagneten 34 weg in Schließstellung. Die Schließstellung ist erneut erst nach einer gewissen Totzeit $t_2$ erreicht, die zum Aufbau des Magnetfeldes und Verschieben des Steuerschiebers 14 bis zur Steuerkante 26 notwendig ist. Das Steuerventil 11 ist somit wieder geschlossen. Der entsprechende Kurvenverlauf 48 des Öffnungswegs s über der Zeit t ist in Figur 2d dargestellt. In Figur 2e ist anhand der Kurve 49 die Durchflußmenge Q über der Zeit t dargestellt. Bei Abschalten der Elektromagnete 33, 34 gehen die Steuerschieber 13 und 14 in die jeweilige Ausgangsstellung zurück. Die Spulenkörper 41, 42 sind aus ferromagnetischem Material, so daß der permanentmagnet 35 bzw. 36 - durch seine Anziehungskraftsamt Steuerschieber 13 bzw. 14 zum Elektromagneten 33 bzw. 34 hin und somit in seine Ausgangsstellung bewegt wird.

Beide Elektromagnete 33, 34 sind individuell erregbar, sind aber gleich ausgebildet, d.h. gleiche Windungszahl. Ebenfalls sollten die Steuerschieber 13, 14 gleich ausgebildet sein und gleiche Wegstrecken während eines Steuervorgangs überstreichen. Sollten aber unterschiedliche Elektromagnete und Steuerschieber verwendet werden, so ist darauf zu achten, daß die Totzeiten $t_1$ bzw. $t_2$ der beiden Steuerschieber 13, 14 gleich sind. Dadurch hat die Totzeit keinen Einfluß auf die Dosierung der Druckmittelmenge Q. Durch Veränderung des Ansteuerzeitversatzes $t_V$ kann die Druckmittelmenge von Null bis zu einem beliebigen, gewünschten Wert verändert werden.

Ohne vom Gedanken der Erfindung abzuweichen, können die beiden Steuerschieber 13, 14 auch durch zwei Sitzventile ersetzt sein. Außerdem ist es auch möglich die Steuerschieber in zwei Ebenen anzuordnen.

Beim Ausführungsbeispiel nach Figur 3 ist an den Steuerschiebern 51, 52 gegenüber Figur 1 kein Permanentmagnet angeordnet. Statt dessen weist jeder Steuerschieber 51, 52 eine Sackbohrung 53, 54 auf, in der sich eine Druckfeder 55, 56 befindet, die auf das jeweilige Ende 57, 58 des Steuerschiebers 51, 52 so einwirkt, daß sie versucht, diesen in die Schieberbohrung 12 hineinzuschieben. Die Steuerschieber 51, 52 bestehen aus weichmagnetischem Material. Die Anordnung der Steuerkammern 16, 17 ist gegenüber dem Ausführungsbeispiel nach Figur 1 unterschiedlich. Die Verbraucherkammer 18 ist zwischen der Steuerkammer 17 und dem Gehäuse 32 angeordnet. Die Gehäuse 31, 32 bestehen aus weichmagnetischem Material.

Während im Ausführungsbeispiel nach Figur 1 die Wirkungsweise des Steuerventils 11 auf der abstoßenden Wirkung zwischen Permanentmagneten und Elektromagneten beruht, werden im Ausführungsbeispiel nach Figur 2 die Steuerschieber 51, 52 von den Elektromagneten 33, 34 angezogen und durch die Druckfedern 55, 56 in die Ausgangsstellung zurückbewegt. Im übrigen entspricht die Wirkungsweise dem Ausführungsbeispiel nach Figur 1.

## Patentansprüche

1. Steuerventil (11) zur Steuerung einer Flüssigkeitsmenge mittels elektromagnetisch unabhängig voneinander betätigbaren Steuerschiebern (13, 14) mit jeweils zwei Schaltstellungen, nämlich einer Öffnungsstellung und einer Schließstellung, dadurch gekennzeichnet, daß an den außenliegenden Enden (27, 28) der in Reihe geschalteten Steuerschieber (13, 14) Permanentmagnete (35, 36) angeordnet sind und diese in Wirkverbindung mit je einem ansteuerbaren gehäusefesten Elektromagneten (33, 34) stehen, deren Spulenkörper (41, 42) aus weichmagnetischem Material bestehen, daß die Permanentmagnete (35, 36) und die Elektromagnete (33, 34) im Betrieb abstoßende Wirkung aufeinander ausüben, daß sich in Ausgangsstellung des Steuerventils (11) mindestens einer der Steuerschieber (13, 14) in Schließstellung und mindestens ein anderer Steuerschieber (13, 14) sich mindestens teilweise in Öffnungsstellung befinden, und daß sich die Öffnungsperioden des Steuerventils (11) durch Überlappung der Öffnungszeiten bzw. Schließzeiten der Zu- (15) und Ablauföffnungen (18) durch die einzelnen Steuerschieber (13, 14) ergeben.

2. Steuerventil nach Anspruch 1, dadurch gekennzeichnet, daß die Elektromagnete (33, 34) gleiche Windungszahl aufweisen.

3. Steuerventil nach Anspruch 1 und/oder 2, dadurch gekennzeichnet, daß die Steuerschieber (13, 14) aus unmagnetischem Material bestehen.

4. Steuerventil nach einem der Ansprüche 1 bis 3, dadurch gekennzeichnet, daß die Steuerschieber (13, 14) gleich ausgebildet sind.

5. Steuerventil (11) zur Steuerung einer Flüssigkeitsmenge mit aus elektromagnetisch unabhängig voneinander betätigbaren Steuerschiebern (51, 52), mit jeweils zwei Schaltstellungen, nämlich einer Öffnungsstellung und einer Schließstellung, dadurch gekennzeichnet, daß die in Reihe geschalteten Steuerschieber (51, 52) aus weichmagnetischem Material bestehen und in Wirkverbindung mit je einem ansteuerbaren, gehäusefesten Elektromagneten (33, 34) stehen, daß diese auf die Steuerschieber (51, 52) eine anziehende Wirkung ausüben, daß Druckfedern (55, 56) als Rückstellkraft für die Steuerschieber (51, 52) angeordnet sind, daß sich in Ausgangsstellung des Steuerventils (11) mindestens einer der Steuerschieber (13, 14) in Schließstellung und mindestens ein anderer Steuerschieber (13, 14) sich mindestens teilweise in Öffnungsstellung befinden, und daß sich die Öffnungsperioden des Steuerventils (11) durch Überlappung der Öffnungszeiten bzw. Schließzeiten der Zu- (15) und Ablauföffnungen (18) durch die einzelnen Steuerschieber (51, 52) ergeben.

6. Steuerventil nach einem der Ansprüche 1 bis 5, dadurch gekennzeichnet, daß die Steuerschieber (13, 14, 51, 52) als Sitzventile ausgebildet sind.

7. Steuerventil nach einem der Ansprüche 1 bis 6, <u>dadurch gekennzeichnet,</u> daß die Steuerschieber (13, 14, 51, 52) gleichachsig angeordnet sind.

### Claims

1. Control valve (11) for controlling a quantity of fluid by means of control slide valves (13, 14) which can be electromagnetically actuated independently of one another, having in each case two switching positions, namely an open position and a closed position, characterized in that permanent magnets (35, 36) are arranged at the outer ends (27, 28) of the series-connected control slide valves (13, 14) and these permanent magnets are effectively connected to one actuatable electromagnet (33, 34) each which is fixed to the housing and the coil formers (41, 42) of which consist of soft-magnetic material, that the permanent magnets (35, 36) and the electromagnets (33, 34) exert a repelling effect upon one another in operation, that at least one of the control slide valves (13, 14) is in the closed position and at least one other control slide valve (13, 14) is at least partially in the open position in the initial position of the control valve (11), and that the periods of opening of the control valve (11) are the result of overlapping the opening times or closing times of the inlet (15) and outlet openings (18) by means of the individual control slide valves (13, 14).

2. Control valve according to Claim 1, characterized in that the electromagnets (33, 34) exhibit the same number of turns.

3. Control valve according to Claim 1 and/or 2, characterized in that the control slide valves (13, 14) consist of non-magnetic material.

4. Control valve according to one of Claims 1 to 3, characterized in that the control slide valves (13, 14) are of the same construction.

5. Control valve (11) for controlling a quantity of fluid, comprising control slide valves (51, 52) which can be electromagnetically actuated independently of one another, having in each case two switching positions, namely an open position and a closed position, characterized in that the series-connected control slide valves (51, 52) consist of soft magnetic material and are effectively connected to one actuatable electromagnet (33, 34) each which is fixed to the housing, that these assert an attracting effect on the control slide valves (51, 52), that compression springs (55, 56) are arranged as restoring force for the control slide valves (51, 52), that at least one of the control slide valves (13, 14) is in the closed position and at least one other control slide valve (13, 14) is at least partially in the open position in the initial position of the control valve (11), and that the periods of opening of the control valve (11) result from overlapping the opening times and closing times of the inlet (15) and outlet openings (18) by means of the individual control slide valves (51, 52).

6. Control valve according to one of Claims 1 to 5, characterized in that the control slide valves (13, 14, 51, 52) are constructed as seat valves.

7. Control valve according to one of Claims 1 to 6, characterized in that the control slide valves (13, 14, 51, 52) are arranged on the same axis.

### Revendications

1. Vanne pilote (11) pour commander un débit de liquide à l'aide de tiroirs de commandes (13, 14) actionnée de manière électromagnétique, indépendamment l'un de l'autre, et ayant chaque fois deux positions de commutation, à savoir une position d'ouverture et une position de fermeture, vanne pilote caractérisée en ce que l'extrémité extérieure (27, 28) de chaque tiroir de commande (13, 14) en ligne comporte des aimants permanents (35, 36) qui coopèrent avec chaque fois un électro-aimant (33, 34) commandé, solidaire du boîtier, dont le corps de bobine (41, 42) est en fer doux, les aimants permanents (35, 36) et les électro-aimants (33, 34) exerçant en fonctionnement un effet de répulsion, et en position de sortie de la vanne pilote (11) au moins l'un des tiroirs de commande (13, 14) est en position de fermeture et au moins un autre tiroir de commande (13, 14) est au moins partiellement en position d'ouverture et en ce que les périodes d'ouverture des vannes de commande (11) résultent du chevauchement des temps d'ouverture ou de fermeture des orifices d'alimentation et d'évacuation (18) à travers les différents tiroirs de commande (13, 14).

2. Vanne pilote selon la revendication 1, caractérisée en ce que les électro-aimants (33, 34) ont le même nombre de spires.

3. Vanne pilote selon la revendication 1 et/ou 2, caractérisée en ce que les tiroirs de commande (13, 14) sont réalisés en un matériau amagnétique.

4. Vanne pilote selon l'une des revendications 1 à 3, caractérisée en ce que les tiroirs de commande (13, 14) sont identiques.

5. Vanne pilote (11) pour commander une quantité de liquide à l'aide de tiroirs de commandes (51, 52) actionnés de manière électromagnétique indépendamment l'un de l'autre, avec chaque fois deux positions de commutation, à savoir une position d'ouverture et une position de fermeture, vanne pilote caractérisée en ce que les tiroirs de commande (51, 52) branchés en lignes, sont en fer doux et coopèrent avec chaque fois un électro-aimant (33, 34) commandé, solidaire du boîtier, ces électro-aimants exerçant un effet d'attraction sur les tiroirs de commandes (51, 52), des ressorts de compression (55, 56) assurant la force de rappel des tiroirs de commande (51, 52) et en position de sortie des vannes de commande (11), au moins l'un des tiroirs de commande (13, 14) est en position de fermeture et au moins un autre tiroir de commande (13, 14) est au moins partiellement en position d'ouverture et en ce que les périodes d'ouverture de la vanne pilote résultent du chevauchement des temps d'ouverture ou de fermeture des orifices d'alimentation (15) et de sortie (18) à travers les différents tiroirs de commande (51, 52).

6. Vanne pilote selon l'une des revendications 1 à 5, caractérisee en ce que les tiroirs de commande (13, 14, 51, 52) sont des vannes à clapets.

7. Vanne pilote selon l'une des revendications 1 à 6, caractérisée en ce que les tiroirs de commande (13, 14, 51, 52) sont coaxiaux.

**Fig. 1**

**Fig. 2a**

**Fig. 2b**

**Fig. 2c**

**Fig. 2d**

**Fig. 2e**

**Fig. 3**